Europäisches Patentamt

European Patent Office

Office européen des brevets

(11) Publication number: **0 140 047**
**A2**

# (12) EUROPEAN PATENT APPLICATION

(21) Application number: **84110561.2**

(22) Date of filing: **05.09.84**

(51) Int. Cl.⁴: **F 02 B 23/06**

(30) Priority: **05.09.83 JP 163005/83**

(43) Date of publication of application:
**08.05.85 Bulletin 85/19**

(84) Designated Contracting States:
**DE FR GB IT SE**

(71) Applicant: **KABUSHIKI KAISHA TOYOTA CHUO
KENKYUSHO
41-1, Aza Yokomichi Oaza Nagakute Nagakute-cho
Aichi-gun Aichi-ken, 480-11(JP)**

(72) Inventor: **Aoyama, Taro
No. 2056, Aza Ebiyama Oaza Shimada Tenpaku-cho
Tenpaku-ku Nagoya-shi Aichi(JP)**

(72) Inventor: **Sunami, Kiyokazu
No. 37-2, Wakinoshima-cho 7-chome
Tajimi-shi Gifu(JP)**

(72) Inventor: **Mizuta, Junichi
No. 8-26, Shoei-cho 3-chome
Kariya-shi Aichi(JP)**

(74) Representative: **Diehl, Hermann O., Dr. et al,
Diehl & Partner Flüggenstrasse 17
D-8000 München 19(DE)**

(54) Direct fuel injection type internal combustion engine.

(57) A direct fuel injection type internal combustion engine having a combustion chamber formed with a recess in which intake air is introduced and swirled. A swirl injector is arranged such that its central spray axis does not intersect the central axis of the recess but extends at an inclination thereto. The maximum distance between the facing sides of the recess is set at 25 to 65 mm. The distance between the axis of sprays of the swirl injector and a second plane intersecting, at a right angle, a first transverse plane containing the location of the maximum distance D of the recess, the second plane being parallel to the axis of sprays of the swirl injector and containing the center of the recess on the first transverse plane, is set at 6 to 20 mm. The angle contained between the axis of sprays of the swirl injector and the first transverse plane is set at 40 to 70 degrees.

FIG. 1

EP 0 140 047 A2

DIRECT FUEL INJECTION TYPE

INTERNAL COMBUSTION ENGINE

BACKGROUND OF THE INVENTION

The present invention relates to direct injection type internal combustion engine which is an improvement of an engine described in co-assigned U.S. application No. 513,490, filed July 13, 1983.

In the prior art, a direct injection type internal combustion engine having a combustion chamber formed by a recess in the top face of a piston does not have a communication port between the swirl chamber or the precombustion chamber and the main chamber, but has a lower compression ratio than that of an internal combustion engine having a swirl chamber and a precombustion chamber, and hence enjoys the advantage of a smaller frictional loss and thus lower specific fuel consumption rate. The direct injection type internal combustion engine having that advantage is frequently used as a large-sized engine. On the other hand, a small-sized engine having a small cylinder diameter is accompanied by a problem in forming the air-fuel mixture which is different from that of a large-sized engine.

In the direct injection type internal combustion engine of the prior art, a fuel injector is disposed generally at the center of a recess formed in the top face of the piston, and a plurality of sprays are injected radially from a corresponding number of injection ports. The swirls of the intake air generated in the suction stroke of the engine by the intake valve or the intake passage are still present at the end of the compression stroke so that the air-fuel mixture is formed in the recess while the fuel sprays are forced in the swirling direction. The recess used generally has a diameter ranging from 40 to 70 % of the diameter of the piston. In a small-sized engine having a piston diameter of 100 mm or smaller, the recess diameter must be reduced to increase the compression ratio. As a result, the fuel sprays injected radially from the injection ports of the fuel injector impinge upon the inner wall surface of the recess to wet the wall surface in the form of a liquid fuel film or to remain as coarse droplets. The liquid fuel thus left is not effectively burned so that the optimum mixture for the combustion is not produced and the output power and fuel economy are less than desired. Moreover, smoke is often produced.

In order to prevent the fuel from impinging upon the wall surface of the recess, generally, the following methods have been used: (a) the swirls established in the combustion chamber are intensified; (b) the fuel injector is provided with injection ports of a reduced size but increased number; and (c) the compression ratio is raised to boost the pressure (air density) in the recess at the time of fuel injection thereby to weaken the spray penetration from the fuel injector.

In an engine having a cylinder diameter of 100 to 120 mm, according to method (a), the intensity of the swirls is about a swirl ratio of 4 (which is a measure of the intensity of the swirls established in the combustion chamber and which is a value determined by dividing the angular velocity of the swirls by the angular velocity of the engine) and is limited to about 3.5 to 3.6 in an engine having a cylinder diameter of 90 mm or less. If the swirl intensity is made more than that value, to the contrary, the resistance of the intake passage to the fluid is increased, raising problems that the intake charging efficiency of the engine is remarkably low and that the the heat loss through the walls of the combustion chamber is high.

If the size of the injection ports of the fuel injector is made small, according to method (b), the fuel is finely atomized, weakening its penetration. If the injection ports are made excessively small, however, they become liable to be clogged, raising a practical problem for a size of 0.15 mm or smaller. On the other hand, increasing the number of injection ports leads to a problem that the sprays jetted from adjacent injection ports merge in the vicinity of the side wall of the recess to establish an excessively fuel-enriched region in some portions thereby causing smoking. In an engine having a cylinder diameter of 120 mm or smaller, therefore, the number of the injection ports is generally limited to 4 to 5.

Because the clearance formed between the cylinder head and the piston top face makes little contribution to combustion, the volume of the recess has to be 70 % or more of the clearance volume so that the direct injection type internal combustion engine can generate a sufficient output power while the compression ratio is determined by the ratio of the volume of the combustion chamber at bottom dead center to the clearance volume at top dead center, according to method (c), in order to raise the compression ratio. Therefore, it is desired that the top clearance be made as small as possible. However, the aforementioned clearance is limited up to 0.5 mm, taking into consideration manufacturing tolerances and normal thermal expansion of the engine parts. As the engine becomes smaller, therefore, it becomes more difficult to increase the compression ratio. Even, however, if this ratio can be made high, a problem arises in that the engine is then difficult to assemble and adjust.

In order to solve the aforementioned problems which are intrinsic to the small-sized direct fuel injection type internal combustion engine of the prior art, the present invention has been made.

After experiments and analyses, the following has been discovered:

(1)      Atomization

The fuel is vaporized and burned more promptly as its droplets become smaller. This means it necessary for the fuel droplets injected from the fuel injector to be small.

(2)      Penetration

The fuel droplets are surrounded by burned gas if they stand still in the combustion chamber, in which case combustion will not proceed. This makes it necessary for the fuel droplets to have a sufficient force to continue to penetrate into the combustion chamber until combustion is complete.

(3)     Fuel Distribution

In order for the fuel to be burned as much as possible in the combustion chamber without any emission of smoke to realize a high mean effective pressure, substantially all the air in the cylinder has to be consumed. The air left where the fuel droplets fail to reach is not used, but there is insufficient air where the fuel droplets aggregate densely, resulting in incomplete combustion. In accordance with the advance of the combustion, therefore, the fuel droplets have to be effectively dispersed throughout the combustion chamber.

(4)     Burning Velocity

The fuel sprays injected from the fuel injector diverge while moving through the combustion chamber. The amount of this divergence is determined by the strength of penetration and the shapes or pattern of the fuel spray. If combustion relies only upon the divergence, combustion takes much time so that it becomes difficult to complete it during the effective combustion duration. This makes it necessary to swirl the intake air to accelerate the burning velocity.

The aforementioned items (1) to (3) concern properties of fuel injection. Specifically, the fuel droplets play an important role in dispersing the sprays by fuel injection, that is, in forming the mixture. In other words, the atomized fuel droplets form the mixture while penetrating into the combustion chamber. It has therefore been thought that an injection nozzle producing a weak penetration cannot be used in a direct injection type internal combustion engine.

Our experimental analyses have revealed that the previous theories of forming the mixture in a direct injection type internal combustion engine have the following inconsistencies:

(a)     the amount of penetration is reduced if the fuel droplets are small; and

(b)     the amount of penetration is reduced if the spray angle is increased so as to improve the distribution of the fuel droplets in the combustion chamber.

In order to reduce the size of the fuel droplets and to improve their distribution without reducing the reach of the fuel spray, it is necessary to intensify the intake swirls and to raise the compression ratio.

## SUMMARY OF THE INVENTION

With these requirements in mind, the present invention changes the common sense approach, such that the fuel injector of the present invention functions both to finely atomize the fuel and to distribute the fuel widely on the projected plane in the combustion chamber but is not expected to function to effect penetration. Therefore, the fuel droplets injected from the fuel injector may be stagnant at their respective positions unless there is a flow of the intake air within the combustion chamber. The intake swirl, which is established in the combustion chamber in a descending manner while swirling, and/or the flow, which enters the recess from the flat portion of the piston top face, carry the fuel droplets in the depth direction of the combustion chamber while ensuring the burning rate. In other words, the fuel injector controls the distribution of the fuel droplets into a specified region of the recess whereas the intake swirl and/or the so-called "squish flow" control the dispersion of the fuel droplets over the whole of the recess.

Another object of the present invention is to provide a direct fuel injection type internal combustion engine in which a swirl injector is used to effect dispersion of the fuel sprays into a predetermined region of the recess so that atomization of the fuels is improved by a low injection pressure and so that dispersion of the sprays in the predetermined region of the recess is improved by a large atomization angle and by a weak spray penetration, whereby the sprays are prevented from striking the wall surface of the combustion chamber and are suitably mixed with the weak intake swirls.

Yet another object of the present invention is to provide a direct fuel injection type internal combustion engine in which either the intake swirls established in the combustion chamber which descend while swirling or a combination of those intake swirls and the so-called "squish flow" effect dispersion of the fuel uniformly throughout the recess so that the fuel sprays can be moved more readily into the main flow of the intake swirls and forced in the depthwise direction of the combustion chamber to prevent the sprays from wetting the wall surface of the combustion chamber and so that the swirling motions of the intake swirls are promoted to enhance the burning velocity.

Still another object of the present invention is to provide a direct fuel injection type internal combustion engine in which the fuel sprays do not converge at the center axis of the recess but are mixed into the main flow of the intake swirls so that they may be moved in the direction of the peripheral portions of the recess in which the fuel sprays are ignited to bring the burned gas to the center of the recess by the intake swirls so that unburned gas is always present in the peripheral portions of the recess to stabilize and smooth the combustion process.

A further object of the present invention is to provide a direct fuel injection type internal combustion engine in which the fuel sprays are prevented from impinging upon the wall surfaces of the combustion chamber to prevent the fuel droplets from becoming coarse so that the combustion is remarkably improved, and thus emission of smoke is remarkably reduced and emissions of hydrocarbons reduced, and generation of carbon particles is suppressed.

In order to achieve the objects thus far described, we have noted that a swirl injector, used for atomizing fuel, sprays the fuel in a generally conical form while swirling the same under a low injection pressure. This swirl injector has such a low injection pressure as to dispense with the need for a newly designed high-pressure injection system and provides excellent atomization and a large spraying angle so that it is suitable for improving the dispersion of the sprays. Moreover, the swirl injector produces sprays having a weak penetration so that it is suitable for preventing the sprays from wetting the wall surfaces. Moreover, the swirl injector is suitable for mixing sprays with weak intake swirls without any necessity for strengthening the intake swirls.

Next, we have investigated the positions of mounting the swirl injector so as to make sufficient use of the aforementioned advantages of the swirl injector. In case the swirl injector is disposed such that the longitudinal axis does not intersect the central axis of the recess formed in the combustion chamber and is inclined relative to the same, as it is offset further from the central axis of the recess, the amount of wetting of the opening's edges and side face of the recess with the sprays is increased and the flow rate of the sprays into the main flow of the intake swirls in the recess is reduced. As the swirl injector is moved closer to the central axis of the recess while, on the other hand, the flow rate of the sprays into the main flow of the intake swirls in the recess is increased.

Taking the above facts into consideration, we have conceived the present invention.

According to one feature of the present invention, there is provided a direct fuel injection type internal combustion engine comprising a combustion chamber defined by a piston, a cylinder head and a cylinder block; the piston including a recess, in which intake air is introduced and swirled; and a fuel injector comprising: a swirl injector for atomizing fuel in a generally conical form while swirling the same, the swirl injector having a port of injection disposed to face the recess and being arranged such that its axis of sprays fails to intersect the central axis of the recess but extends at an inclination with respect to the same; wherein the following specifications are satisfied:

$D$ = 25 to 65 mm

$\beta$ = 6 to 20 mm, and

$\Theta$ = 40 to 70 degrees,

wherein: $D$ designates a maximum distance between facing sides of the recess, $\beta$ designates the distance between the axis of sprays of the swirl injector and a second plane intersecting, at a right angle, a first transverse plane containing the location of the maximum distance $D$ of said recess, the second plane being parallel to the axis of sprays of said swirl injector and containing the center of said recess on the first transverse plane; $\Theta$ designates the angle contained between the axis of sprays of said swirl injector and the first transverse plane, whereby the fuel is prevented from wetting the wall surface of the combustion chamber to improve the combustion characteristics of the engine and to thereby reduce the specific fuel consumption.

According to another feature of the present invention, there is provided a direct fuel injection type internal combustion engine wherein the following relationship is satisfied: $D = 25$ to $65$ mm, $\beta = 6$ to $20$ mm, $\alpha = 7$ to $25$ mm, and $\theta = 40$ to $70$ degrees, in which $\alpha$ designates the distance between the port of injection of said swirl injector during fuel injection and the plane intersecting the second plane at a right angle and containing the center of the recess on the first transverse plane.

Other objects, features and advantages of the present invention will become apparent from the following description taken in conjunction with the accompanying drawings, in which:

Fig. 1 is a transverse section showing a preferred embodiment of an engine of the present invention;

Fig. 2 is a longitudinal cross-sectional view of a portion of the engine of Fig. 1; and

Figs. 3 to 6 are diagrams showing performance results obtained by the present invention.

According to the internal combustion engine of the present invention, the range in which the swirl injector can be applied is defined by 350 to 750 $cm^3$ in terms of stroke volume $V_H$, corresponding to a compression ratio $\varepsilon$ of 15 to 20. As a result, the clearance volume ($V_C = \dfrac{V_H}{\varepsilon - 1}$) takes a value 18.4 to 53.6 $cm^3$. In the direct fuel injection type internal combustion engine having the above stroke volume, on the other hand, the volume $V_{cav}$ of the recess has to be 70 % or more of the clearance volume so that the engine can attain an otherwise sufficient performance, and accordingly takes a value of 12 to 50 $cm^3$.

If it is considered that a relatively intense swirl is required for realizing good combustion in a small displacement engine equipped with a swirl injector, the recess desirably should have a spheroidal shape so as to ensure intense swirling in the recess at the end of the compression stroke. The reason why the aforementioned intense swirl is required is explained by the fact that promotion of spray dispersion and introduction of air into the spray are more strongly affected by air swirl than by fuel injection system containing the swirl injector.

The maximum diameter of the recess is expressed by the following equation (assuming the recess has a semispherical shape):

$$D = 20.3 \; \sqrt[3]{\frac{3V_{cav}}{2\pi}},$$

where $V_{cav}$ is expressed in $cm^3$. It follows that the maximum diameter D corresponding to the stated preferred volume of the recess is 36 to 58 mm.

In order to satisfy the requirement for intense swirling, it may be considered to increase the intensity of the intake swirls. Doing so, however, is accompanied by a drawback in that the resistance or drag to the intake air is increased, thereby reducing the volumetric efficiency of the engine. On the other hand, swirling can be intensified by making the opening of the recess narrower than the maximum area of the recess to make positive use of the squish flow. This approach is advantageous in that mixture is thereby prevented from flowing out of the recess through its opening and becoming unburned hydrocarbons, that combustion is prevented from being quenched outside of the recess, and that the intake air resistance is not raised, preventing a lowering of the volumetric efficiency. As a result, the maximum diameter D in the case the recess is throttled is 25 to 65 mm.

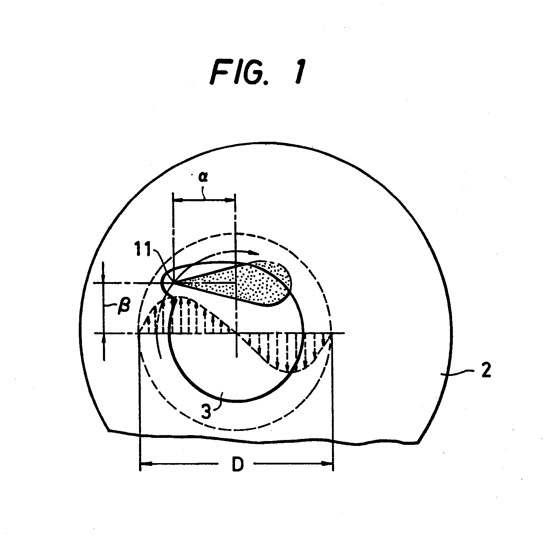

As indicated by broken arrows in Fig. 1, the highest velocity of the swirls in the recess is located at a radius of about 0.30 to 0.35 times the maximum recess diameter D. Excellent mixture preparation can thus be realized by effectively carrying the fuel sprays on the main flow of the swirls in this region. This realization is the role of the aforementioned distance $\beta$, which should thus satisfy the following:

$$0.30D \leq \beta \leq 0.35D.$$

For the instant example, the necessary condition is that $\beta$ = 7.5 to 22.75 mm.

If the spray angle $\theta_s$ of the swirl injector is large, the fuel spray has a tendency to wet the wall surfaces, bringing about the aforementioned disadvantages of the spray droplets becoming coarse or forming a liquid film on the wall surface of the recess. We have found, after several series of experiments and much analyses, that the distance $\beta$ capable of eliminating these defects is 6 to 20 mm. If the distance $\beta$ exceeds 20 mm, the amount of wetting of the side walls of the recess is increased. If the distance β is less than 6 mm, the sprays concentrate at the central portion of the recess, reducing the amount of spray dispersion. Also, the swirling velocity is remarkably low so that the amount of air introduced into the spray is insufficient, degrading the mixture formation and reducing air utilization in the recess for combustion. In the central portion of the recess, moreover, the burned gas is collected by the swirls, yielding the so-called "thermal-pinched state", so that the combustion does not proceed stably and smoothly. This results in an increase in the amount of smoke emitted and an increase in the specific fuel consumption rate.

The setting of the angle Θ is done primarily to prevent wetting of the wall of the recess with the fuel and to insure effective dispersion of the fuel sprays in the recess. The value of β is to be taken into account in establishing Θ. If the angle Θ is smaller than 40 degrees, the possibility of the fuel sprays wetting the lower face of the cylinder head or the top face of the piston and scattering the fuel outside the recess is increased. If this should happen, an increase results in the emissions of unburned hydrocarbons and the combustion efficiency is lowered. Due to characteristics of the swirl injector, moreover, the fuel spray is difficult to disperse into the bottom of the recess and it tends to accumulate in the vicinity of the top of the recess to remarkably degrade the air utilization in the recess. Moreover, the mixture tends to flow away from the vicinity of the top of the recess through the opening of the recess to become unburned hydrocarbons, or the combustion is interrupted outside of the recess to increase the. emissions of smoke or the soot. If the angle $\Theta$ exceeds 70 degrees, on the other hand, depending on the later-described distance $\alpha$, the fuel sprays from the swirl injector wet directly the opening's edges and the side wall of the recess, or the amount of the fuel wetting the side wall of the bottom of the recess is increased (depending on the aforementioned distance $\beta$). This results in adverse effects that the spray droplets become coarse and form a liquid film on the wall surface of the recess. In order to eliminate those defects, the angle $\Theta$ should be in a range of 40 to 70 degrees.

Furthermore, the distance $\alpha$ is important in preventing wetting of the wall surfaces of the recess, taking into consideration the aforementioned angle $\Theta$ and the distance $\beta$. If the ratio $2\alpha/D$ exceeds 0.8 (for $\alpha$ = 25), more specifically, the fuel sprays from the swirl injector have a greater tendency to wet the opening's edges and side walls of the recess, or else the amount of wetting of the bottom of the recess is remarkably increased. If the ratio $2\alpha/D$ is smaller than 0.4 (for $\alpha = 7$), on the other hand, the fuel spray is concentrated at the central portion of the recess due to the characteristics (weak penetration, large spraying angle and excellent atomization) of the swirl injector, degrading the amount of dispersion, and due to the remarkably low swirling velocity about this region introduction of air into the spray becomes insufficient. Still further, in the central portion of the recess, the burned gas tends to accumulate due to the swirling action, resulting in the "thermal-pinched state" in which combustion does not proceed stably and smoothly. This results in an increase in smoke production and an increase in the specific fuel consumption.

By satisfying the aforementioned numerical ranges in a direct fuel injection type internal combustion engine of the present invention, the spray is supplied to the desired region of the recess without wetting the opening's edges or side faces of the recess, and the rate of mixing the sprays into the main flow of the intake swirl in the recess is augmented. In addition, a squish flow, which is directed from the clearance between the cylinder head and the piston top to the center of the recess, is established upon the rise of the piston. This squish flow assists in preventing the spray from wetting the open edge and side faces of the recess and promotes swirling.

In the internal combustion engine of the present invention, the injected spray is prevented from impinging upon the wall surface of the recess by satisfying the aforementioned numerical requirements, and the fuel distribution in the recess is made substantially uniform over all the recess by the interaction of the intake swirl and the squish flow. Thus, the internal combustion engine of the present invention enjoys practically high effects in which the sprays are prevented from impinging upon the wall surfaces of the recess and from becoming coarse, thereby suppressing emissions of smoke remarkably well. Also, the emissions of the hydrocarbons are reduced due to the excellent fuel atomization and dispersion of the swirl injector, thus suppressing the formation of fine carbon particulates and hence improving the combustion remarkably, whereby various performance characteristics of the engine are improved. Other effects are that the spray is not accumulated around the central axis of the recess, and that the rate at which the spray is mixed into the main flow of the intake swirl of the recess is further increased. Still further, an ensuing combustion process is ensured to be stable and smooth. More specifically, the spray is carried by the intake swirls into the main flow and thereby located in the peripheral portions of the recess. After that, ignition is initiated from the peripheral portion of the recess. Thus, the burned gas is brought to the central portion of the recess by the intake swirl. As a result, the possibility of interruption of the combustion process is avoided by the fact that unburned gas is always present in the peripheral portion of the recess. The direct injection type internal combustion engine has an improved combustion efficiency because the swirl injector has, at low injection pressure, a variety of advantageous features such as excellent atomization, large spray angle and weak penetration. By considering the interference between the reach of the spray with respect to the injection direction and the location of the wall surfaces of the recess, the spray dispersion in the recess is remarkably improved to improve the engine performance as a whole to a marked extent.

As is believed apparent from the description thus far made, the direct injection type internal combustion engine according to the present invention disperses the fuel spray into the recess in such a manner as to neither intensify the intake swirl in the recess of the combustion chamber nor raise the fuel injection pressure into the recess, thereby preventing the fuel spray from wetting the opening's edges and the side faces of the recess and eliminating the defects of the prior art caused by an increase in the intensity of the intake swirl and in the fuel injection pressure.

In the present invention, the central longitudinal axis of the fuel injector and the central axis of the spray need not be limited to the aligned relationship, and may have a parallel or nonparallel relationship.

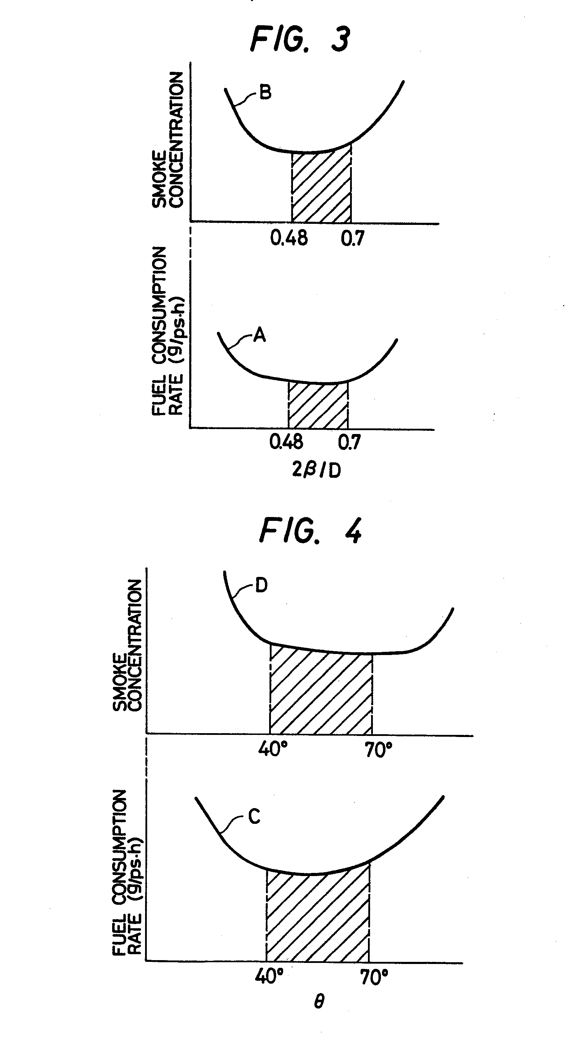

In the internal combustion engine of the present invention, more specifically, due to the fact that the distance $\beta$ is 6 to 20 mm, more preferably, 8 to 15 mm, the fuel spray is dispersed effectively in the recess without being concentrated in the central portion of the recess nor being degraded in dispersion, and is prevented from wetting the side walls of the recess. As a result, the specific fuel consumption rate is reduced, as indicated in Fig. 3 by a hatched region defined below a curve A (plotted for $2\beta/D = 0.48$ to 0.7), and also the amount of smoke generated is reduced, as indicated by a region defined by a curve B and hatched in the same Figure.

In the internal combustion engine of the present invention, moreover, due to the fact that the angle θ is 40 to 70 degrees, more preferably, 45 to 65 degrees, the fuel spray from the swirl injector is prevented from wetting the lower face of the cylinder head or the top face of the piston so that most of the spray is prevented from being scattered to the outside of the recess. This reduces the emissions of hydrocarbons and enhances the combustion efficiency. From the aforementioned characteristics of the swirl injector, moreover, the fuel spray is effectively dispersed in the bottom of the recess and not accumulated in the vicinity of the top of the recess, accordingly enhancing the air utilization in the recess. Moreover, no mixture flows from the vicinity of the recess top through the recess opening so that no such mixture is converted to unburned hydrocarbons and so that the combustion is not interrupted outside of the recess, thereby reducing the production of smoke and soot accordingly.

By properly setting the distance α, the fuel spray is prevented from directly wetting the opening's edges and the side walls of the recess. By properly setting the distance β, the wetting of the recess bottom with the fuel is also prevented. Moreover, by properly setting the angle Θ, the specific fuel consumption is reduced, as indicated by a hatched region defined below a curve C (plotted for Θ = 40 to 70 degrees) in Fig. 4, and the smoke concentration is also reduced, as indicated by a region defined by a curve D and hatched in the same Figure.

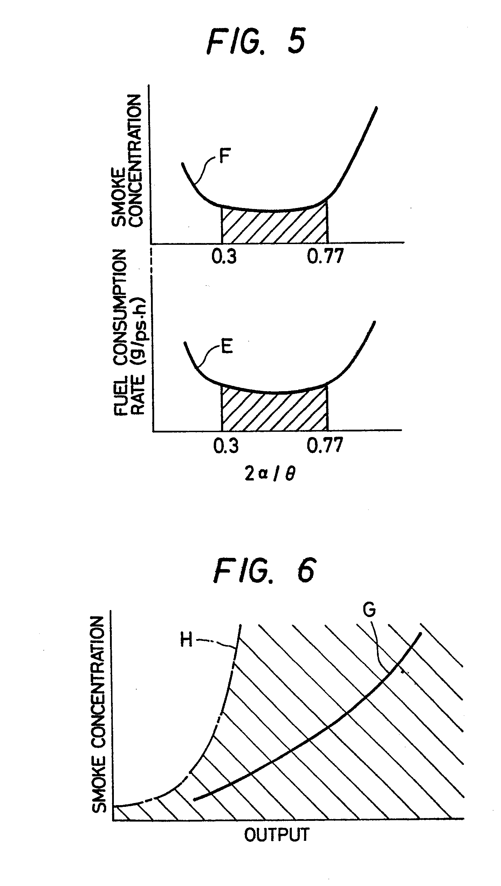

In the internal combustion engine of the present invention, still further, due to the fact that the distance b is 7 to 25 mm, more preferably, 9 to 20 mm, the fuel spray from the swirl injector is prevented from wetting the opening's edges and the side walls of the recess, and the wetting of the side walls of the recess bottom with the fuel is also remarkably reduced. At the same time, from the characteristics (weak penetration, large spray angle and excellent atomization) of the swirl injector, the fuel spray is not concentrated at the central portion of the recess and is effectively dispersed. Also, the swirling velocity is not low, thereby eliminating the disadvantage of insufficient air introduction into the spray. Since the burned gas is not collected in the central portion of the recess by the swirls, moreover, the so-called "thermal-pinched state" is avoided, allowing combustion to proceed stably and smoothly. This results in a reduction in smoke production and in an improvement in the specific fuel consumption rate. Specifically, the specific fuel consumption rate is reduced, as indicated by a hatched region defined below a curve E (plotted for $2\alpha/D$ = 0.3 to 0.77) in Fig. 5, and the smoke concentration is reduced, as indicated by a region defined by a curve F and hatched region in the same. Figure.

The preferred embodiments of the present invention will now be described in more detail with reference to the accompanying drawings.

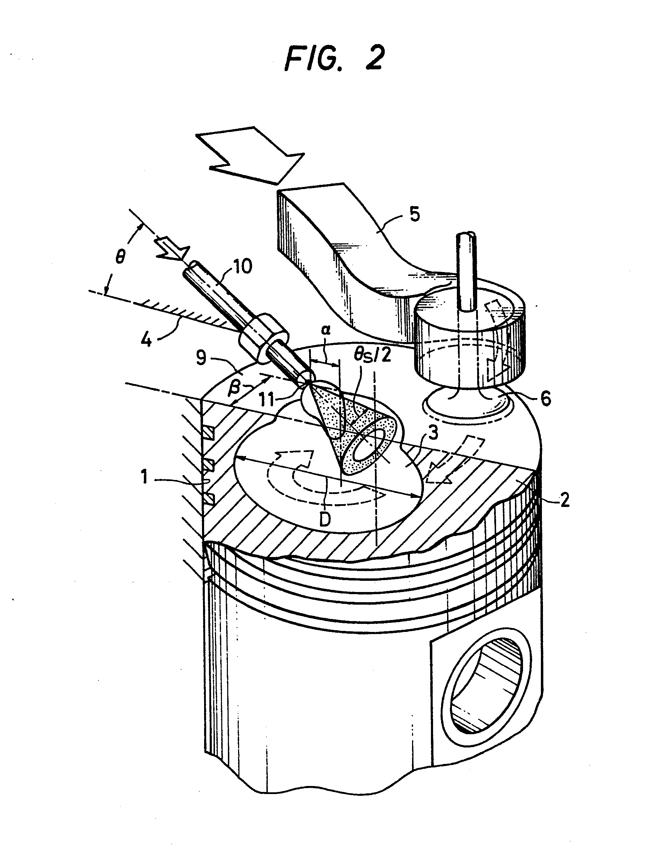

The direct injection type internal combustion engine according to the present embodiment, as shown in Figs. 1 and 2, is a Diesel engine in which a piston 2, fitted slidably in a cylinder 1, has formed in its top face a generally spherical recess 3 disposed eccentrically with respect to the central axis of the piston 2. A cylinder head 4 is formed with an intake passage 5 and an exhaust passage (not shown), with the intake port of the intake passage being equipped with an intake valve 6 and the exhaust port of the exhaust passage being equipped with an exhaust valve (not shown), the intake and exhaust valves being arranged to face the top surface of the piston 2. The cylinder 1, the piston 2 and the cylinder head 4 define together a combustion chamber 9. A swirl injector 10, acting as a low-pressure fuel injector, is mounted in the cylinder head 4 with its injection port 11 facing the opening of the recess 3 forming a part of the combustion chamber 9 such that its central axis of spraying is offset from the central axis of the recess 3 and it extends at a predetermined angle with respect to the same. Thus, the intake air upon entering the combustion chamber 9 by way of the intake passage 5 is made to swirl in the recess 3, and the fuel, injected by the swirl injector 10 which is inclined with respect to the swirling direction of the main flow, is sprayed in a generally conical form while swirling.

The combustion chamber 9 in this example has a displacement of 460 cm$^3$ and a compression ratio of 18. The distance β between the axis of sprays of the swirl injector and a second plane intersecting, at a right angle, a first transverse plane containing the location of the maximum distance D of the recess 3, the second plane being parallel to the axis of sprays of the swirl injector and containing the center of the recess on the first transverse plane is 11.4 mm, and the angle θ contained

between the axis of sprays of the swirl injector 10 and the first transverse plane is 50 degrees. Further, the distance between the port of injection of the swirl injector during fuel injection and the plane intersecting the second plane at a right angle and containing the center of the recess on the first transverse plane is 13 mm.

In short: D = 38 mm, β = 11.4 mm, α = 13 mm, and θ = 50 degrees. These values satisfy the relationship of D = 25 to 65 mm, β = 6 to 20 mm, α = 7 to 25 mm, and θ = 40 to 70 degrees, as well as the more preferable relationship of D = 30 to 50 mm, β = 8 to 15 mm, α = 9 to 20 mm, and θ = 45 to 65 degrees, as will be described hereinafter.

In the case the aforementioned numerical specifications are not satisfied, the spray wets the wall surfaces of the recess 3, causing the emission of smoke and reducing the dispersion of the fuel, making it impossible to reduce the emissions of hydrocarbons. Because the formation of carbon particulates cannot be suppressed, it is impossible to further improve the combustion efficiency of the engine. If the spray is concentrated in the vicinity of the opening of the recess 3, production of smoke is promoted, fuel dispersion is degraded, the emission of the hydrocarbons increased, and the formation of carbon particulates promoted, making it impossible to improve the combustion efficiency. This results in a performance which is outside of the region defined by a curve H and hatched region in Fig. 6.

As shown in Fig. 6, plotting the output on the abscissa and the smoke concentration on the ordinate, for the case of a curve G for which the aforementioned numerical specifications are satisfied, the engine exhibits a much superior performance compared with the case indicated by a curve H, for which those specifications are not satisfied, demonstrating that, with the invention, a higher output can be attained with a low smoke emission.

According to the internal combustion engine exemplifying the present invention having the construction thus far described, by satisfying the various above-specified numerical ranges, it is possible to prevent the fuel droplets from wetting the opening edge or side wall of the recess 3, to augment the rate at which the fuel droplets are mixed with the main flow of the intake swirl within the recess 3, and to remarkably improve combustion of the internal combustion engine with the resultant effect that the performance can be substantially improved.

There can be attained another effect such that the fuel droplets are not concentrated in the vicinity of the center of the recess, while further augmenting the rate at which the fuel droplets are mixed with the main flow of the intake swirl within the recess 3, so that the ensuing combustion process can be affected stably and smoothly. In more detail, the fuel droplets are carried by the intake swirl so that they are mixed with the main air flow until they are carried to the peripheral portions of the recess 3. Afterwards, ignition is initiated from the peripheral portion of the recess 3 so that the burned gases are carried by the intake swirl to the central portion of the recess 3. As a result, the unburned gases are always present at the peripheral portions of the recess 3, thereby eliminating the possibility of causing deterioration of the ensuing combustion process.

With the engine of the invention, the fuel injection pressure should be not higher than 150 to 200 kg/cm$^2$, which value is low for a direct injection type internal combustion engine. In the Diesel engine according to the present embodiment, the fuel is injected under a low injection pressure from the swirl injector 10 into the main flow of the weak intake swirl of the recess 3 so that the sprays are excellently dispersed with little wetting of the opening's edges or side faces of the recess 3.

## CLAIMS

1.    A    direct    fuel    injection    type    internal
combustion engine comprising:

a   combustion   chamber   defined   by   a   piston,   a
cylinder head and a cylinder block, said piston including
a  recess  in  which  intake  air  is  introduced  and  swirled;
and

a fuel injector comprising:

a   swirl   injector   for   atomizing   fuel   in   a
generally  conical  form  while  swirling  the  same,  said  swirl
injector  having  a  port  of  injection  disposed  to  face  said
recess  and  being  arranged  such  that  its  axis  of  sprays
fails  to  intersect  the  central  axis  of  said  recess  but
extends  at  an  inclination  with  respect to  the  same;

wherein   the   following   specifications   are
satisfied:

D = 25 to 65 mm,

$\beta$ = 6 to 20 mm, and

$\theta$ = 40 to 70 degrees,

wherein:

D  designates  a  maximum  distance  between
facing sides of said recess,

$\beta$ designates a distance between the axis of
sprays   of   said   swirl   injector   and   a   second   plane intersecting, at a right angle, a first transverse plane containing the location of the maximum distance D of said recess, said second plane being parallel to the axis of sprays of said swirl injector and containing the center of said recess on said first transverse plane; and

θ designates the angle contained between the axis of sprays of said swirl injector and the first transverse plane.

2. The direct fuel injection type internal combustion engine according to claim 1, wherein the following specifications are satisfied:

D = 25 to 65 mm,

β = 8 to 15 mm, and

θ = 45 to 65 degrees.

3. The direct fuel injection type internal combustion engine according to claim 1, wherein the following specification is satisfied:

α = 7 to 25 mm,

wherein α designates the distance between the port of injection of said swirl injector during fuel injection and the plane intersecting the second plane at a right angle and containing the center of the recess on the first transverse plane.

4. The direct fuel injection type internal combustion engine according to claim 3, wherein the following specifications are satisfied:

D = 30 to 50 mm,

$\beta$ = 8 to 15 mm,

$\alpha$ = 9 to 20 mm, and

$\Theta$ = 45 to 65 degrees.

5. The direct fuel injection type internal combustion engine according to claim 4, wherein the following specifications are satisfied:

D = 38 mm,

$\beta$ = 11.4 mm,

$\alpha$ = 13 mm, and

$\Theta$ = 50 degrees.

FIG. 1

## FIG. 2

## FIG. 3

SMOKE CONCENTRATION

B

0.48    0.7

FUEL CONSUMPTION RATE (9/ps·h)

A

0.48    0.7

$2\beta/D$

## FIG. 4

SMOKE CONCENTRATION

D

40°    70°

FUEL CONSUMPTION RATE (9/ps·h)

C

40°    70°

$\theta$

## FIG. 5

## FIG. 6